# EUROPEAN PATENT APPLICATION

(11) **EP 3 035 093 A2**
(43) Date of publication of application: **22.06.2016**
(21) Application number: 15196800.5
(22) Date of filing: 27.11.2015
(51) Int. Cl.: G02B 6/27

(54) **BEAM PROCESSING DEVICE, BEAM ATTENUATION AND SWITCHING DEVICE, AND OPTICAL WAVELENGTH SELECTIVE SWITCH SYSTEM**

(30) Priority: 29.11.2014 CN 201410715002
(71) Applicant: Huawei Technologies Co., Ltd., Longgang District Shenzhen, Guangdong 518129 (CN)
(72) Inventor: LIU, Heliang, 518129 Shenzhen (CN); DING, Bifeng, 518129 Shenzhen (CN); LI, Minchun, 518129 Shenzhen (CN); MAO, Chongchang, 518129 Shenzhen (CN)
(74) Representative: Epping - Hermann - Fischer

(57) **Abstract**

The present invention discloses a beam processing device, a beam attenuation and switching device, and an optical wavelength selective switch system. The beam processing device in the present invention includes a polymer polarization grating (1021) and a quarter-wave plate array (1022). Splitting and adjustment of a beam polarization state may be implemented by using the polymer polarization grating and the quarter-wave plate array. The beam attenuation and switching device includes a switchable polarization grating and an optical path angle adjustment device, or includes a half-wave liquid crystal plate, a quarter-wave plate, a polymer polarization grating, and an optical path angle adjustment device. The optical wavelength selective switch system includes the foregoing beam processing device and the foregoing beam attenuation and switching device, where a structure is relatively simple, assembly is also relatively simple, and production technologies of the polymer polarization grating, the quarter-wave plate, and the switchable polarization grating are relatively simple; therefore, embodiments of the present invention may simplify a production technology, reduce a cost, and improve performance.

## Description

### TECHNICAL FIELD

The present invention relates to the field of optical communications technologies, and in particular, to a beam processing device, a beam attenuation and switching device, and an optical wavelength selective switch system.

### BACKGROUND

For an optical transmission network, a reconfigurable optical add/drop multiplexer (Reconfigurable Optical Add/Drop Multiplexer, ROADM) technology may implement wavelength switching and dimension switching on an optical network node, and can flexibly expand a network capacity and reduce operating expense to meet a requirement for flexible scheduling on a service network.

Currently, in the ROADM, a beam processing device in an optical wavelength selective switch (Wavelength Selective Switch, WSS) system is generally used to perform polarization state splitting and adjustment on an input beam or an output beam. Currently, the beam processing device generally uses the following manner to process the input beam and the output beam: The input beam is shaped by using a micro lens array (Micro Lens Array, MLA); after passing through a Wollaston prism, the shaped beam is split into two beams of linearly polarized lights whose polarization directions are perpendicular to each other. The two beams of linearly polarized lights are split along different directions with respective to an optical axis of the MLA, and then undergo phase compensation performed by a birefringent crystal; finally, after passing through a half-wave plate, one beam of linearly polarized lights rotates 90 degrees, to obtain two linearly polarized lights whose polarization directions are parallel to each other.

In order to implement splitting and adjustment of a beam polarization state, a solution of using the Wollaston prism, a phase compensation plate, and the half-wave plate for implementation is used in the foregoing. However, the Wollaston prism is generally obtained by using a technology such as grinding, where a production technology is complex, and a complex process is needed to assemble the foregoing parts, so that production of the beam processing device is also relatively complex, and production costs are also relatively high.

### SUMMARY

Embodiments of the present invention provide a beam processing device, a beam attenuation and switching device, and an optical wavelength selective switch system. The structure and the production technology of the beam processing device are simple.

According to a first aspect, a beam processing device is provided, including at least one quarter-wave plate array, where each quarter-wave plate array is corresponding to at least one polymer polarization grating, and the polymer polarization grating and the quarter-wave plate array are successively arranged on an optical transmission path, where:
the polymer polarization grating splits a beam that is incident on a surface of the polymer polarization grating into a left-handed circularly polarized light and a right-handed circularly polarized light; and
the quarter-wave plate array includes at least two quarter-wave plates whose slow axes are in different directions, and adjusts, to linearly polarized lights that have a same polarization direction, the left-handed circularly polarized light and the right-handed circularly polarized light that are obtained after the polymer polarization grating performs the splitting.

With reference to the first aspect, in a first implementation manner, each quarter-wave plate array is corresponding to one polymer polarization grating; and
the one polymer polarization grating corresponding to each quarter-wave plate array is configured to split a beam that is incident on a surface of the polymer polarization grating into a left-handed circularly polarized light and a right-handed circularly polarized light that have different transmission angles.

With reference to the first aspect, in a second implementation manner, each quarter-wave plate array is corresponding to two polymer polarization gratings; and
the two polymer polarization gratings corresponding to each quarter-wave, plate array are configured to split a beam that is incident on a surface of the polymer polarization gratings into a left-handed circularly polarized light and a right-handed circularly polarized light that have a same transmission angle.

According to a second aspect, a beam attenuation and switching device is provided, including a switchable polarization grating and an optical path angle adjustment device, where the switchable polarization grating and the optical path angle adjustment device are successively arranged on an optical transmission path, where:
the switchable polarization grating is configured to: when a first voltage is applied, after diffracting an incident beam, change a polarization state and a transmission angle that are of the incident beam; when a second voltage is applied, after diffracting an incident beam, skip changing a polarization state and a transmission angle that are of the incident beam; or when different voltages are applied, diffract an incident beam, so as to change the incident beam to another transmission angle different from an original transmission angle, and attenuate a beam in a direction of the original transmission angle; and
the optical path angle adjustment device is configured to adjust, to a different transmission angle, a beam that is incident on the optical path angle adjustment device after passing through the switchable polarization grating, and then output the beam.

With reference to the second aspect, in a first implementation manner, the optical path angle adjustment device is a liquid crystal on silicon or micro-electro-mechanical systems.

According to a third aspect, a beam attenuation and switching device is provided, including a first half-wave liquid crystal plate, a first quarter-wave plate, a polymer polarization grating, and an optical path angle adjustment device that are successively arranged on an optical transmission path, where:
the first half-wave liquid crystal plate is configured to: at different voltages, change a polarization direction of a linearly polarized light that is incident on a surface of the first half-wave liquid crystal plate;
the first quarter-wave plate is configured to adjust, to a left-handed circularly polarized light or a right-handed circularly polarized light, a linearly polarized light that is obtained after the first half-wave liquid crystal plate performs processing;
the polymer polarization grating is configured to split, into lights that have different transmission angles, the left-handed circularly polarized light or the right-handed circularly polarized light that is obtained after the first quarter-wave plate performs processing; and
the optical path angle adjustment device is configured to adjust, to different transmission angles, the lights that have different transmission angles, are obtained after the polymer polarization grating performs the splitting, and are incident on a surface of the optical path angle adjustment device, and then reflect adjusted lights for outputting, where after successively passing through the polymer polarization grating, the first quarter-wave plate, and the first half-wave liquid crystal plate, the reflected lights become linearly polarized lights that have a same polarization direction.

With reference to the third aspect, in a first implementation manner, the optical path angle adjustment device is micro-electro-mechanical systems.

With reference to the third aspect, in a second implementation manner, the optical path angle adjustment device is a liquid crystal on silicon, the beam attenuation and switching device further includes a second quarter-wave plate and a second half-wave liquid crystal plate that are successively arranged on the optical transmission path, the second quarter-wave plate and the second half-wave liquid crystal plate are located between the liquid crystal on silicon and the polymer polarization grating, the second quarter-wave plate is adjacent to the polymer polarization grating, and the second half-wave liquid crystal plate is adjacent to the liquid crystal on silicon, where:
the second quarter-wave plate is configured to adjust, to linearly polarized lights, the left-handed circularly polarized lights or the right-handed circularly polarized lights that have different transmission angles and are obtained after the polymer polarization grating performs the splitting;
the second half-wave liquid crystal plate is configured to adjust, to linearly polarized lights that have a same polarization direction, the linearly polarized lights that are obtained after the second quarter-wave plate performs processing, and enable the polarization direction of the linearly polarized lights that are incident on a surface of the liquid crystal on silicon to be consistent with a direction of an optical axis of the liquid crystal on silicon; and
the liquid crystal on silicon is configured to adjust, to different transmission angles, the linearly polarized lights that are adjusted by the second half-wave liquid crystal plate and then are incident on the surface of the liquid crystal on silicon, and reflect adjusted lights for outputting, where after successively passing through the second half-wave liquid crystal plate, the second quarter-wave plate, the polymer polarization grating, the first quarter-wave plate, and the first half-wave liquid crystal plate, the reflected linearly polarized lights become linearly polarized lights that have a same polarization direction.

According to a fourth aspect, an optical wavelength selective switch system is provided, including an optical fiber array, a beam processing subsystem, an optical path transmission subsystem, and an optical path switching subsystem, where
the optical fiber array is configured to send at least one input beam to the beam processing subsystem and receive at least one output beam output by the beam processing subsystem;
the beam processing subsystem includes the beam processing device involved in the first aspect or either implementation manner of the first aspect, and performs polarization state splitting and adjustment on the input beam or the output beam by using the beam processing device, to obtain linearly polarized lights that have a same polarization direction;
the optical path transmission subsystem is configured to diffract and split, according to different angles, the linearly polarized lights that have the same polarization direction and are obtained after the beam processing device in the beam processing subsystem performs processing, and then transmit the linearly polarized lights to the optical path switching subsystem; and
the optical path switching subsystem includes the beam attenuation and switching device involved in the second aspect, the implementation manner of the second aspect, the third aspect, or either implementation manner of the third aspect, and is configured to change an angle of a beam transmitted by the optical path transmission subsystem, so as to implement attenuation and optical path switching functions.

With reference to the fourth aspect, in a first implementation manner, the optical path transmission subsystem includes a first cylindrical lens, a transmission grating, and a second cylindrical lens, where
an optical axis of the second cylindrical lens and an optical axis of the first cylindrical lens are perpendicular to each other;
the transmission grating is located between the first cylindrical lens and the second cylindrical lens, and a distance between the transmission grating and the second cylindrical lens is less than a distance between the transmission grating and the first cylindrical lens;
the beam processing device in the beam processing subsystem and the beam attenuation and switching device in the optical path switching subsystem are located at a location of focuses of the first cylindrical lens and the second cylindrical lens;
the first cylindrical lens is configured to reflect the linearly polarized lights that have the same polarization direction and are obtained after the beam processing device in the beam processing subsystem performs processing, to parallel linearly polarized lights in a plane that is perpendicular to the optical axis of the first cylindrical lens;
the transmission grating is configured to perform, according to different angles, first diffraction on the parallel linearly polarized lights obtained after the reflection performed by the first cylindrical lens, and perform, according to different angles, second diffraction on a beam reflected by the second cylindrical lens; and
the second cylindrical lens is configured to reflect beams obtained after the transmission grating performs the first diffraction, to parallel linearly polarized lights in a plane that is perpendicular to the optical axis of the second cylindrical lens, and enable the reflected parallel linearly polarized lights to be incident on the transmission grating.

In the beam processing device, the beam attenuation and switching device, and the optical wavelength selective switch system provided in the embodiments of the present invention, the beam processing device includes a polymer polarization grating and a quarter-wave plate array, and the polymer polarization grating splits an input beam into a left-handed circularly polarized light and a right-handed circularly polarized light. The quarter-wave plate array adjusts, to linearly polarized lights that have a same polarization direction, the left-handed circularly polarized light and the right-handed circularly polarized light that are obtained after the polymer polarization grating performs the splitting. Therefore, in the embodiments of the present invention, splitting and adjustment of a beam polarization state may be implemented by using the polymer polarization grating and the quarter-wave plate array, where a structure is simpler and assembly is also simpler compared with a traditional beam processing device that is formed by using a Wollaston prism, a phase compensation plate, and a half-wave plate. In addition, production technologies of the polymer polarization grating and the quarter-wave plate are also simpler compared with a production technology of the Wollaston prism; therefore, the embodiments of the present invention may simplify the production technology of the beam processing device.

### BRIEF DESCRIPTION OF DRAWINGS

FIG. 1A and FIG 1B are schematic structural diagrams of a beam processing device according to an embodiment of the present invention;
FIG 2A to FIG 2D are schematic diagrams of a production technology process of a PPG according to this embodiment of the present invention;
FIG 3A and FIG 3B are schematic diagrams of characteristics of the PPG according to this embodiment of the present invention;
FIG. 4A and FIG. 4B are schematic diagrams of arrangements of a QWPA according to this embodiment of the present invention;
FIG 5 is a schematic diagram of a first process in which a beam processing device performs processing on a beam according to this embodiment of the present invention;
FIG. 6 is a schematic diagram of a second process in which a beam processing device performs processing on a beam according to this embodiment of the present invention;
FIG 7 is a schematic diagram of a third process in which a beam processing device performs processing on a beam according to this embodiment of the present invention;
FIG. 8 is a schematic diagram of a fourth process in which a beam processing device performs processing on a beam according to this embodiment of the present invention;
FIG 9 is a structural block diagram of an optical system according to an embodiment of the present invention;
FIG 10A and FIG 10B are schematic diagrams of a process in which a beam transmission subsystem performs processing on a beam according to this embodiment of the present invention;
FIG 11A and FIG 11B are schematic diagrams of a production process of an SPG according to this embodiment of the present invention;
FIG 12A to FIG 12C are schematic diagrams of characteristics of the SPG according to this embodiment of the present invention;
FIG 13 is a schematic diagram of a first process in which a beam switching subsystem performs processing on a beam according to this embodiment of the present invention;
FIG 14A and FIG 14B are schematic diagrams of a second process in which a beam switching subsystem performs processing on a beam according to this embodiment of the present invention;
FIG 15A and FIG 15B are schematic diagrams of a third process in which a beam switching subsystem performs processing on a beam according to this embodiment of the present invention; and
FIG. 16A and FIG. 16B are schematic diagrams of adjustments of an LCOS angle according to this embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

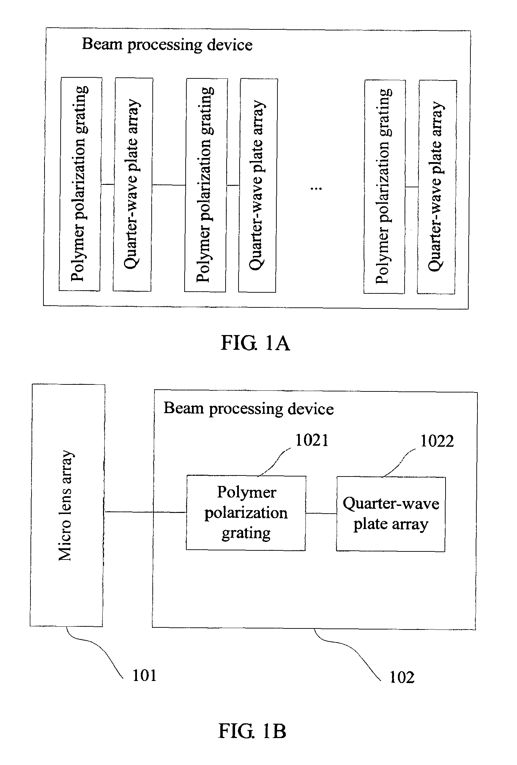

FIG 1A is a schematic structural diagram of a beam processing device according to an embodiment of the present invention. The beam processing device provided in this embodiment of the present invention includes at least one quarter-wave plate array, where each quarter-wave plate array is corresponding to at least one polymer polarization grating, and the polymer polarization grating and the quarter-wave plate array are successively arranged on an optical transmission path.

The polymer polarization grating splits a beam that is incident on a surface of the polymer polarization grating into a left-handed circularly polarized light and a right-handed circularly polarized light; the quarter-wave plate array includes at least two quarter-wave plates whose slow axes are in different directions, and adjusts, to linearly polarized lights that have a same polarization direction, the left-handed circularly polarized light and the right-handed circularly polarized light that are obtained after the polymer polarization grating performs the splitting.

In the following, an embodiment of the present invention uses an example in which a beam processing device performs processing on a beam that is shaped by a micro lens array for description, as shown in FIG 1B.

In this embodiment of the present invention, a beam processing device 102 is adjacent to a micro lens array 101. The beam processing device 102 includes a polymer polarization grating 1021 (Polymer Polarization Grating, PPG) and a quarter-wave plate array 1022 (Quarter-Wave Plate Array, QWPA). The micro lens array 101, the polymer polarization grating 1021, and the quarter-wave plate array 1022 are successively arranged on an optical transmission path.

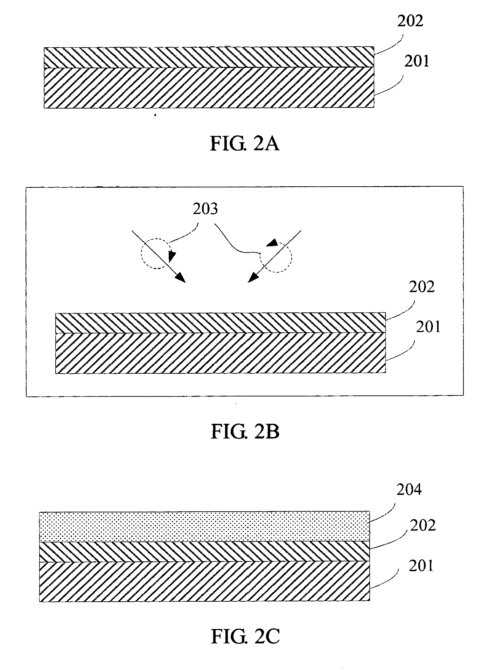

In this embodiment of the present invention, the PPG 1021 included in the beam processing device 102 may be obtained by production in a manner of interference light exposure to a polymer liquid crystal. FIG. 2A to FIG 2D are schematic diagrams of a production technology process of the PPG according to this embodiment of the present invention.

First, a layer of an optical stereoregular polymer material 202 is formed on a glass substrate 201 in a manner such as painting, as shown in FIG 2A.

Second, a light field that is obtained by mutual interference of a left-handed ultraviolet light and a right-handed ultraviolet light 203 is used for light exposure to the optical stereoregular polymer material 202, as shown in FIG 2B.

Third, a layer of a liquid crystal material 204 that has a polymerization characteristic is coated on the optical stereoregular polymer material 202 that has been exposed in FIG 2B, as shown in FIG. 2C.

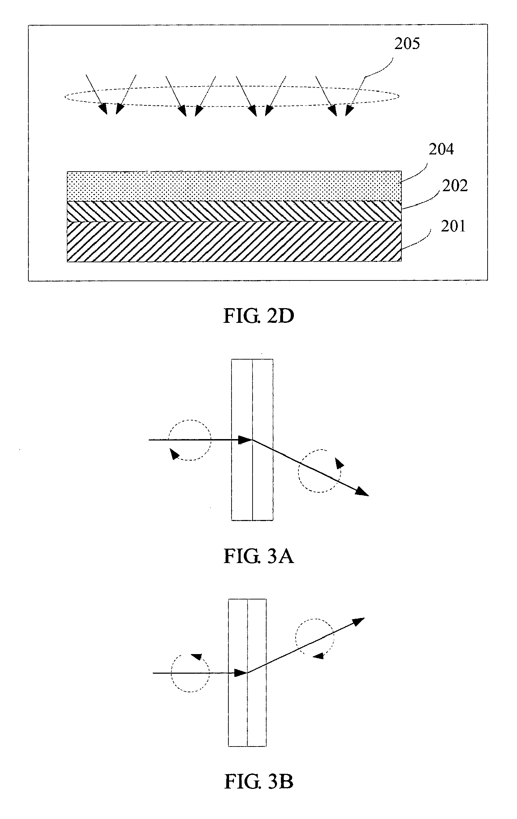

Finally, an uniform ultraviolet light 205 is used to shine on the liquid crystal material 204 that has the polymerization characteristic, thereby solidifying a liquid crystal molecule arrangement in the liquid crystal material 204, as shown in FIG. 2D.

In this embodiment of the present invention, the QWPA 1022 included in the beam processing device 102 may also be obtained by production in the manner of interference light exposure to a polymer liquid crystal. A specific production technology is similar to a process of producing the PPG 1021. However, in a process of light exposure to the optical stereoregular polymer material 202, a linearly polarized ultraviolet light is used, but not the left-handed ultraviolet light and the right-handed ultraviolet light.

In this embodiment of the present invention, the PPG 1021 has functions of changing a polarization state and a transmission angle that are of a right-handed circularly polarized light and a left-handed circularly polarized light, as shown in FIG. 3A and FIG. 3B. In FIG. 3A, after passing through the PPG, a right-handed circularly polarized light becomes a left-handed circularly polarized light. In FIG. 3B, after passing through the PPG, a left-handed circularly polarized light becomes a right-handed circularly polarized light. A change of the transmission angles of the right-handed circularly polarized light and the right-handed circularly polarized light that pass through the PPG is related to a production condition of the PPG. In this embodiment of the present invention, the following example is used for description: In FIG. 3A, after passing through the PPG, the right-handed circularly polarized light becomes a left-handed circularly polarized light and the left-handed circularly polarized light shines downwards; in FIG. 3B, after passing through the PPG, the left-handed circularly polarized light becomes a right-handed circularly polarized light and the right-handed circularly polarized light shines upwards.

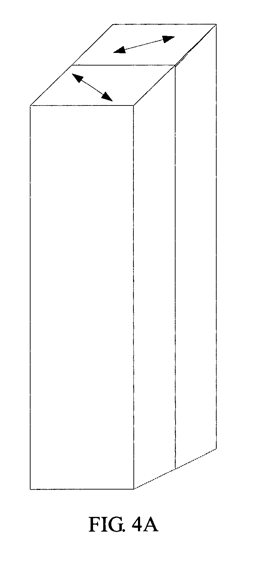

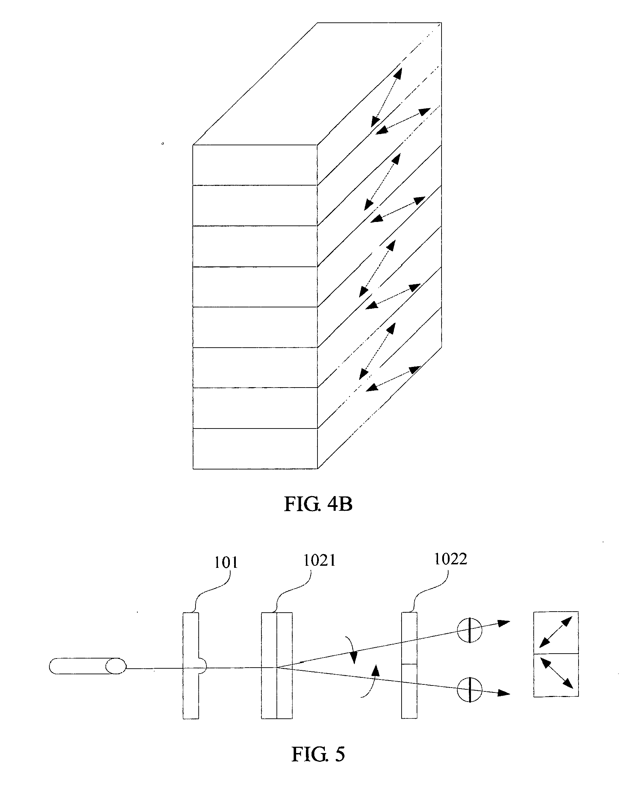

In this embodiment of the present invention, the QWPA 1022 is equivalent to multiple quarter-wave plates that are of a same width, in different directions of slow axes, and successively arranged. The quarter-wave plates may be arranged side by side or arranged up and down. As shown in FIG 4A and FIG. 4B, the QWPA 1022 may adjust the left-handed circularly polarized light and the right-handed circularly polarized light to linearly polarized lights that have a same polarization direction.

In this embodiment of the present invention, the PPG 1021 is adjacent to the MLA 101 and configured to split a beam that is shaped by the MLA 101 into a left-handed circularly polarized light and a right-handed circularly polarized light. Shaping a beam refers to changing a size of a light spot of the beam. The QWPA 1022 is located on an optical transmission path that is adjacent to the PPG 1021, and adjusts, to linearly polarized lights that have a same polarization direction, the left-handed circularly polarized light and the right-handed circularly polarized light that are obtained after the PPG 1021 performs the splitting. FIG. 5 is a schematic diagram of a process in which the MLA 101, the PPG 1021, and the QWPA 1022 are used to perform processing on a beam according to this embodiment of the present invention. As shown in FIG. 5, after the input beam is shaped by using the MLA 101 and passes through the PPG 1021, the right-handed circularly polarized light in the input beam becomes a left-handed circularly polarized light and the left-handed circularly polarized light shines downwards, and the left-handed circularly polarized light in the input beam becomes a right-handed circularly polarized light and the right-handed circularly polarized light shines upwards. After the left-handed circularly polarized light and the right-handed circularly polarized light that are obtained after the PPG 1021 performs processing pass through the QWPA 1022, the upward right-handed circularly polarized light and the downward left-handed circularly polarized light separately pass through quarter-wave plates (Quarter-Waveplate, QWP) whose slow axes are in different directions, so that the linearly polarized lights that have the same polarization direction may be obtained.

In the beam processing device provided in this embodiment of the present invention, an input beam is split into a left-handed circularly polarized light and a right-handed circularly polarized light by using a PPG 1021, and the left-handed circularly polarized light and the right-handed circularly polarized light that are obtained after the PPG 1021 performs the splitting are adjusted by using a QWPA 1022 to linearly polarized lights that have a same polarization direction. Therefore, in this embodiment of the present invention, the beam processing device may implement splitting and adjustment of a beam polarization state by using the PPG 1021 and the QWPA 1022, where a structure is simpler and further assembly is also simpler compared with a traditional beam processing device that is formed by using a Wollaston prism, a phase compensation plate, and a half-wave plate. In addition, in this embodiment of the present invention, the PPG 1021 and the QWPA 1022 may be obtained by production in a manner of light exposure to a polymer liquid crystal, and a used production technology is also simpler compared with a production technology of the Wollaston prism; therefore, this embodiment of the present invention may simplify a production technology of the beam processing device.

Further, in this embodiment of the present invention, production of the PPG 1021 and the QWPA 1022 may be implemented on a large glass substrate, and then a device of a required size is obtained by using a cutting technology. For example, a size of a device that is used is 2*5 square millimeters; then, a two-inch square glass substrate may produce 250 devices; therefore, a cost of a single device is quite low.

The beam processing device provided in this embodiment of the present invention may be applied to an optical system in which a beam polarization state needs to be adjusted, where the optical system may be, for example, an optical wavelength selective switch system. The beam processing device provided in this embodiment of the present invention may flexibly adjust a combination manner of the PPG 1021 and the QWPA 1022 that are in the beam processing device 102, so as to be applicable to different optical systems.

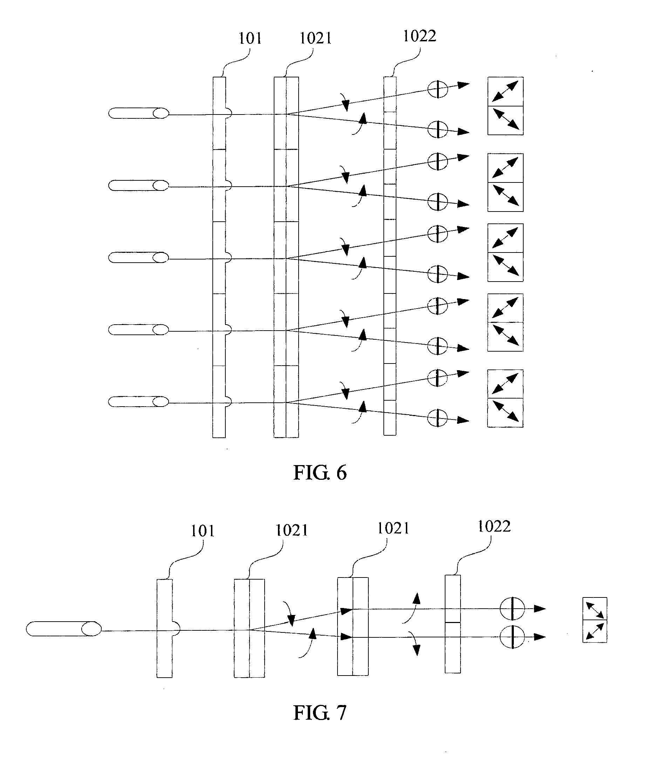

In this embodiment of the present invention, in order to implement that an incident beam is split and adjusted into two linearly polarized lights that have different transmission angles and a same polarization direction, one PPG 1021 and a group of QWPAs 1022 may be used in the beam processing device 102. After an input beam passes through the PPG 1021, the input beam may be split into a left-handed circularly polarized light and a right-handed circularly polarized light that have different transmission angles; then, after the left-handed circularly polarized light and the right-handed circularly polarized light pass through the QWPA 1022, linearly polarized lights that have a same polarization direction may be obtained. A plane in which a beam polarization state is split is perpendicular to a plane in which input optical fibers and output optical fibers reside. For a specific structure, reference may be made to FIG 5, where the QWPA that is used uses the structure shown in FIG 4A. In this embodiment of the present invention, directions in which optical fibers are arranged in the beam processing device may also be parallel with the plane in which the beam polarization state is split, as shown in FIG 6. In this case, multiple QWPAs with different principal axis directions need to be used for implementation, that is, the QWPA uses the structure shown in FIG 4B.

In this embodiment of the present invention, in order to implement that an incident beam is split and adjusted into two linearly polarized lights that have a same transmission angle and a same polarization direction, two PPGs 1021 and a group of QWPAs 1022 may be used in each beam processing device 102. After an input beam passes through the first PPG 1021, the input beam may be split into a left-handed circularly polarized light and a right-handed circularly polarized light that have different transmission angles. After passing through the first PPG 1021, the left-handed circularly polarized light and the right-handed circularly polarized light pass through the second PPG 1021, and a left-handed circularly polarized light and a right-handed circularly polarized light that shine in parallel with each other may be obtained. The right-handed circularly polarized light and left-handed circularly polarized light that pass through the second PPG 1021 and shine in parallel to each other pass through the QWPA 1022, so that linearly polarized lights that have a same polarization direction may be obtained, as shown in FIG 7.

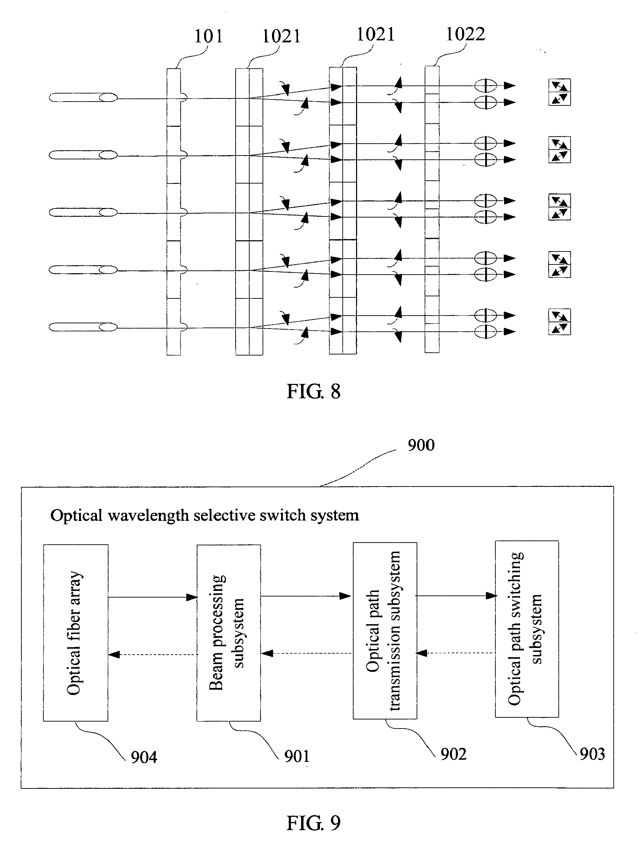

In FIG 7, the plane in which the beam polarization state is split is perpendicular to the plane in which input optical fibers and output optical fibers reside, and the QWPA that is used uses the structure shown in FIG 4A. In this embodiment of the present invention, directions in which optical fibers are arranged in the beam processing device may also be parallel with the plane in which the beam polarization state is split, as shown in FIG. 8. Multiple QWPAs with different principal axis directions need to be used for implementation, that is, the QWPA uses the structure shown in FIG. 4B.

Based on the beam processing device provided in the foregoing embodiment of the present invention, an embodiment of the present invention further provides an optical wavelength selective switch system 900. The optical wavelength selective switch system 900 includes a beam processing subsystem 901, an optical path transmission subsystem 902, and an optical path switching subsystem 903, and certainly the optical wavelength selective switch system 900 further includes an optical fiber array 904, as shown in FIG. 9.

In FIG. 9, the optical fiber array 904 is configured to send at least one input beam to the beam processing subsystem 901 and receive at least one output beam output by the beam processing subsystem 901. The beam processing subsystem 901 includes the beam processing device involved in the foregoing embodiment, and is configured to perform polarization state splitting and adjustment on the at least one input beam sent by the optical fiber array 904 to the beam processing subsystem, to obtain linearly polarized lights that have a same polarization direction. The optical path transmission subsystem 902 is configured to diffract and split, according to different angles, the linearly polarized lights that have the same polarization direction and are obtained after the beam processing device in the beam processing subsystem 901 performs processing, and then transmit the linearly polarized lights to the optical path switching subsystem 903. The optical path switching subsystem 903 is configured to change an angle or a location of a beam transmitted by the optical path transmission subsystem 902, so as to implement attenuation and switching functions.

A beam that is attenuated and switched by the optical path switching subsystem 903 is separately processed by the optical path transmission subsystem 902 and the beam processing subsystem 901 according to a reversible process of an optical path. A beam that is returned and coupled is output to the optical fiber array that is used as an output port.

In the optical wavelength selective switch system provided in this embodiment of the present invention, the beam processing subsystem 901 is configured to perform processing on an input beam and an output beam. The optical fiber array 904 in the optical wavelength selective switch system is used as an input port and an output port to send at least one input beam to the beam processing subsystem 901 and receive at least one output beam output by the beam processing subsystem 901. The input beam is an incident beam that is transmitted through an input port of the optical fiber array to the optical system, and the output beam is a beam that is returned and coupled by the optical system and then output to an output port. In this embodiment of the present invention, for a process in which the beam processing subsystem 901 performs polarization state splitting and adjustment on the input beam to obtain linearly polarized lights that have a same polarization direction, reference may be made to the processing process shown in FIG. 5, and details are not described herein again. For an output beam, because of reversibility of an optical path, a beam that is returned from the optical system may be combined by a PPG 1021 and a QWPA 1022 that are used in a beam processing device 102, and then coupled and output to an output port of the optical fiber array.

Second, in this embodiment of the present invention, the optical path transmission subsystem 902 may use a transmission grating, a first cylindrical lens, and a second cylindrical lens to diffract and split, according to different angles, the linearly polarized lights that have the same polarization direction and are obtained after the beam processing device in the beam processing subsystem 901 performs processing. A cylindrical lens may be considered as a non-axisymmetric special aspheric lens. The cylindrical lens may provide a scattering or focusing function in a plane that is perpendicular to an optical axis of the cylindrical lens, and the cylindrical lens in a plane that is parallel with the optical axis of the cylindrical lens is equivalent to a plane. In this embodiment of the present invention, that the transmission grating, the first cylindrical lens, and the second cylindrical lens diffract and split, according to different angles, the linearly polarized lights that have the same polarization direction may use the following manner: An optical axis of the first cylindrical lens is parallel with a direction in which the optical fiber array is arranged, and an optical axis of the second cylindrical lens is perpendicular to the optical axis of the first cylindrical lens. The transmission grating is located between the first cylindrical lens and the second cylindrical lens, and a distance between the transmission grating and the second cylindrical lens is less than a distance between the transmission grating and the first cylindrical lens; the first cylindrical lens is configured to reflect the linearly polarized lights that have the same polarization direction and are obtained after the beam processing device in the beam processing subsystem 901 performs processing, to parallel linearly polarized lights in a plane that is perpendicular to the optical axis of the first cylindrical lens; the transmission grating is configured to perform, according to different angles, first diffraction on the parallel linearly polarized lights that are obtained after the reflection performed by the first cylindrical lens and are in the plane that is perpendicular to the optical axis of the first cylindrical lens, and perform, according to different angles, second diffraction on a beam reflected by the second cylindrical lens; and the second cylindrical lens is configured to reflect a beam obtained after the transmission grating performs the first diffraction, to parallel linearly polarized lights in a plane that is perpendicular to the optical axis of the second cylindrical lens, and enable the reflected parallel linearly polarized lights to be incident on the transmission grating. In this embodiment of the present invention, the transmission grating may diffract and split, according to different angles, beams that are of wavelengths and are incident on a surface of the transmission grating. In addition to changing a light spot, the cylindrical lenses may further reflect, to the transmission grating, a beam diffracted by the transmission grating, to enable the transmission grating to perform the second diffraction on the beam, so that the beam passes through the transmission grating twice; further, an angle at which the beam is split is larger; and further, locations of devices that are in the optical system and used to transmit the beam may be more compact, reducing an overall size of the optical system, and reducing power consumption.

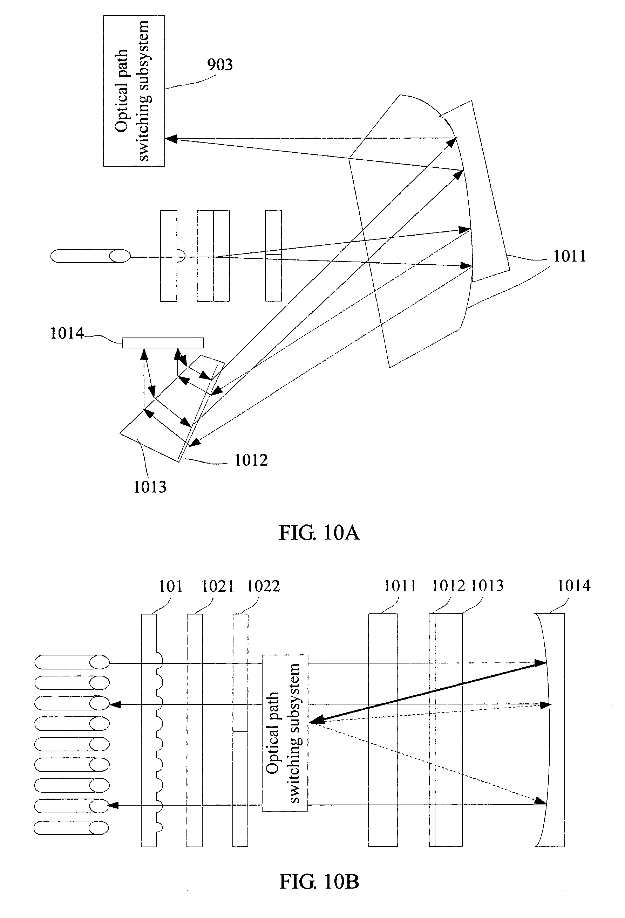

In this embodiment of the present invention, a linearly polarized light is used as an example for description. In a plane that is perpendicular to an optical axis of a first cylindrical lens, as shown in FIG 10A, the linearly polarized light first meets a first cylindrical lens 1011; after being reflected, the linearly polarized light becomes parallel lights in the plane that is perpendicular to the optical axis of the first cylindrical lens. After passing through a transmission grating 1012 and a prism 1013, lights of wavelengths are diffracted and split according to different angles, the lights that are diffracted and split are reflected back by a second cylindrical lens 1014 and then pass through the prism 1013 and the transmission grating 1012 again, so that split angles of the lights of wavelengths are larger. After being reflected by the first cylindrical lens 1011, the lights focus in the optical path switching subsystem 903. Then, a specific angle setting is performed on beams of wavelengths by the optical path switching subsystem 903, and the beams return along another path, and are coupled to corresponding output ports of the optical fiber array for outputting. In a plane that is perpendicular to an optical axis of the second cylindrical lens, as shown in FIG 10B, after passing through the first cylindrical lens 1011, the transmission grating 1012, and the prism 1013, the linearly polarized light reaches the second cylindrical lens 1014. After being reflected, the linearly polarized light becomes parallel lights in the plane that is perpendicular to the optical axis of the second cylindrical lens. Then, after passing the prism 1013, the transmission grating 1012, and the first cylindrical lens 1011 again, the parallel lights reach the optical path switching subsystem 903. Lights of different optical wavelengths are reflected back at different angles according to a corresponding setting; after successively passing through the first cylindrical lens 1011, the transmission grating 1012, the prism 1013, the second cylindrical lens 1014, the prism 1013, the transmission grating 1012, and the first cylindrical lens 1011, reflected lights are coupled to the output port of the optical fiber array for outputting.

In this embodiment of the present invention, the optical path transmission subsystem 902 may use the transmission grating and the cylindrical lenses, which may enable a beam to pass through the transmission grating twice, and further enable a split angle at which the beam is diffracted to double. Two adjacent optical signals that have a gap of 50 GHz are used as an example, and it is assumed that distances by which the two optical signals are split in the optical path switching subsystem are the same. Because a split distance in the optical path switching subsystem is a product of a focal length and a split angle, if a split angle increases twice, a focal length may decrease by a half, which means that a focal length of the entire system may decrease by a half. Because the focal length of the entire system becomes shorter, a distance between the optical fiber array and the cylindrical lens also becomes shorter. In this case, the system becomes more compact, and a smaller beam waist may be used for transmission, thereby further obtaining 3dB spectrum bandwidth.

It should be noted that FIG 10A and FIG 10B in this embodiment of the present invention include the prism 1013. The prism 1013 may perform compensation on the lights of different wavelengths, so that a beam that passes through the optical path transmission subsystem 902 may focus on a same plane of the optical path switching subsystem. In an actual application, the prism 1013 may also not be disposed.

An optical path angle adjustment device may generally be used in the optical path switching subsystem 903. A beam is attenuated by using the optical path angle adjustment device, and the beam is routed to a set output port and then coupled for outputting. The optical path angle adjustment device may be, for example, a liquid crystal on silicon (LCOS, Liquid Crystal on Silicon), micro-electro-mechanical systems (MEMS, Micro-Electro-Mechanical Systems), or the like. The LCOS adjusts an output angle by generating phase gratings of different periods, and the MEMS adjust an output angle by directly adjusting angles of different micro lenses. Currently, in a process in which only the optical path angle adjustment device performs attenuation and switching on a beam, random crosstalk of the beam may be made to another transmission path, which causes instantaneous crosstalk. In this embodiment of the present invention, a switchable polarization grating (Switchable Polarization Grating, SPG) may be added in front of the optical path angle adjustment device, so as to conveniently implement attenuation of an optical path and overcome a problem of instantaneous crosstalk.

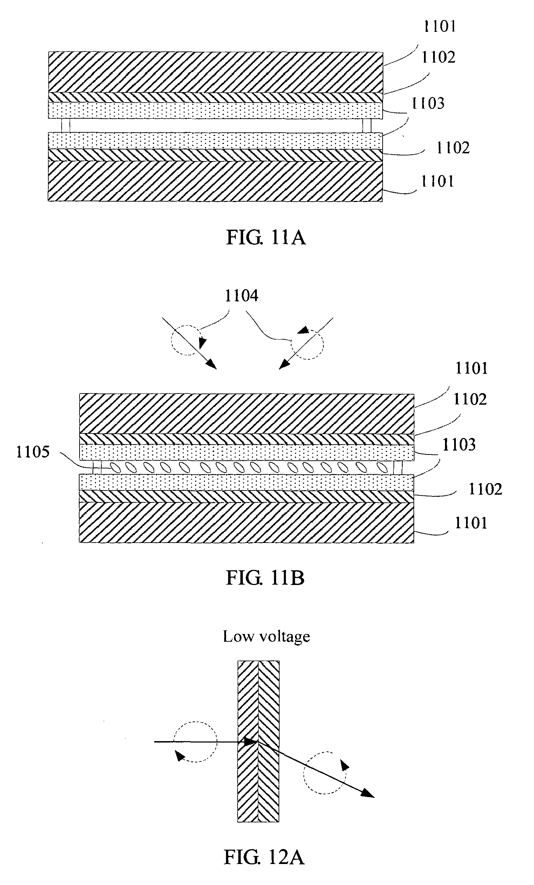

The SPG in this embodiment of the present invention may be produced by using the following production process:
First, an electrode layer 1102 and a light sensitive polymer material 1103 are separately formed on two glass substrates 1101, the two glass substrates on which the electrode layer 1102 and the light sensitive polymer material 1103 are formed are packaged together, and a gap between the two glass substrates is reserved for injection of liquid crystal, as shown in FIG. 11A.
Second, an optical field that is obtained by mutual interference of a left-handed ultraviolet light and a right-handed ultraviolet light 1104 is used for light exposure to the light sensitive polymer material 1103 and solidifying a molecule arrangement in the light sensitive polymer material 1103, and then liquid crystal 1105 is injected into the gap, so that liquid crystal molecules are arranged according to a hologram of the polymer material, as shown in FIG 11 B.

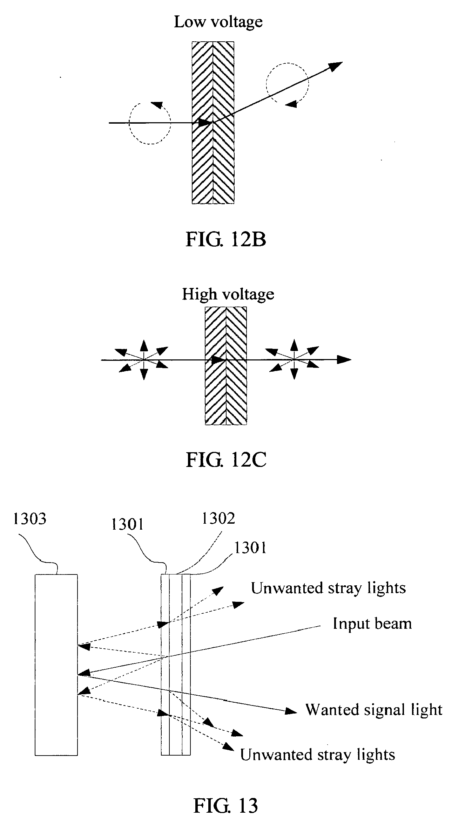

In this embodiment of the present invention, the SPG that is produced by using the foregoing method may have characteristics shown in FIG. 12A to FIG 12C according to values of voltages applied to the SPG. When a low voltage is applied to the SPG, the liquid crystal in the SPG is similar to a holographic grating, so that an incident right-handed circularly polarized light can become a left-handed circularly polarized light and the left-handed circularly polarized light shines downwards (or upwards, which depends on a production condition), as shown in FIG. 12A; an incident left-handed circularly polarized light can become a right-handed circularly polarized light and the right-handed circularly polarized light shines upwards (or downwards, which depends on a production condition), as shown in FIG. 12B. When a high voltage is applied to the SPG, an internal liquid crystal molecule arrangement may change, a holographic grating effect disappears, all lights are directly transmitted along an original direction, and a polarization direction does not change, as shown in FIG. 12C.

In this embodiment of the present invention, the SPG is added in front of the optical path angle adjustment device in the optical path switching subsystem 903, beams that pass through the SPG are transmitted in different directions according to values of voltages applied to the SPG and different polarization states of the input beams. When a high voltage is applied to the SPG, an input light may be transmitted in an original direction; when a low voltage is applied to the SPG, a left-handed circularly polarized light or a right-handed circularly polarized light becomes a right-handed circularly polarized light or a left-handed circularly polarized light and is diffracted to another direction at a relatively large angle; a light reflected by the optical path angle adjustment device cannot be coupled to an output port of the optical fiber array because of a too large angle, and therefore is completely lost, as shown in FIG 13. In other words, in this embodiment of the present invention, the SPG is used in front of the optical path angle adjustment device, and attenuation may be implemented by using the SPG; the optical path angle adjustment device is merely used for optical path switching, which simplifies a control process of optical path switching. Further, in this embodiment of the present invention, in an optical path switching process, attenuation of the SPG is first adjusted to a maximum value, and then optical path switching is performed by using the optical path angle adjustment device. After the optical path angle adjustment device is steady, the attenuation of the SPG is adjusted to a required value, which may prevent instantaneous crosstalk in the optical path switching process.

In a specific implementation process of this embodiment of the present invention, a beam that is transmitted by the optical path transmission subsystem to the optical path switching subsystem is a linearly polarized light; therefore, two QWPs and one SPG are combined together to implement the foregoing beam attenuation function in this embodiment of the present invention, as shown in FIG. 13. After passing through a QWP 1301, an input beam reaches an SPG 1302. After passing through the SPG 1302, the beam is transmitted in different directions according to values of voltages applied to the SPG and different polarization states of the input beam. When a high voltage is applied to the SPG, the input light may be transmitted in an original direction; when a low voltage is applied to the SPG, a left-handed circularly polarized light or a right-handed circularly polarized light becomes a right-handed circularly polarized light or a left-handed circularly polarized light and is diffracted to another direction at a relatively large angle; a light reflected by the optical path angle adjustment device cannot be coupled to an output port of the optical fiber array because of a too large angle, that is, unwanted stray lights in FIG 13. After reaching an optical path angle adjustment device 1303 and being reflected by the optical path angle adjustment device 1303, the lights that are transmitted in the original direction can still be coupled to the output port of the optical fiber array, that is, wanted signal lights in FIG 13.

In this embodiment of the present invention, the optical path angle adjustment device 1303 may be an LCOS or MEMS. If the optical path angle adjustment device 1303 is the LCOS, and the LCOS is applied to this embodiment of the present invention, an optical path switching process may be implemented without using a complex control algorithm for the LCOS. If the optical path angle adjustment device is the MEMS, and the MEMS are applied to this embodiment of the present invention, a problem of instantaneous crosstalk in the optical path switching process may be prevented by using one-dimensional MEMS without using two-dimensional MEMS, thereby reducing MEMS processing difficulty and reducing a cost.

In this embodiment of the present invention, a beam outgoing angle of the optical path switching subsystem 903 may also be increased, so as to achieve coupling to more output ports of the optical fiber array, and also to improve diffraction efficiency of the optical path switching subsystem 903. In this embodiment of the present invention, a PPG, a QWP, a half-wave liquid crystal plate, and an optical path angle adjustment device that are successively arranged on an optical transmission path may be used in the optical path switching subsystem 903. The half-wave liquid crystal plate is configured to: at different voltages, change a polarization direction of a linearly polarized light that is incident on a surface of the half-wave liquid crystal plate; the QWP is configured to adjust, to a left-handed circularly polarized light or a right-handed circularly polarized light, a linearly polarized light that is obtained after the half-wave liquid crystal plate performs processing; the PPG is configured to split, into lights that have different transmission angles, the left-handed circularly polarized light or the right-handed circularly polarized light that is obtained after the quarter-wave plate performs processing, and change polarization states; and the optical path angle adjustment device is configured to adjust, to different transmission angles, the lights that are incident on a surface of the optical path angle adjustment device, and then reflect adjusted lights for outputting, where after successively passing through the PPG, the QWP, and the half-wave liquid crystal plate, the reflected lights become linearly polarized lights that have a same polarization direction, and the linearly polarized lights are routed to the output port of the optical fiber array.

In this embodiment of the present invention, the optical path angle adjustment device may be an LCOS or MEMS.

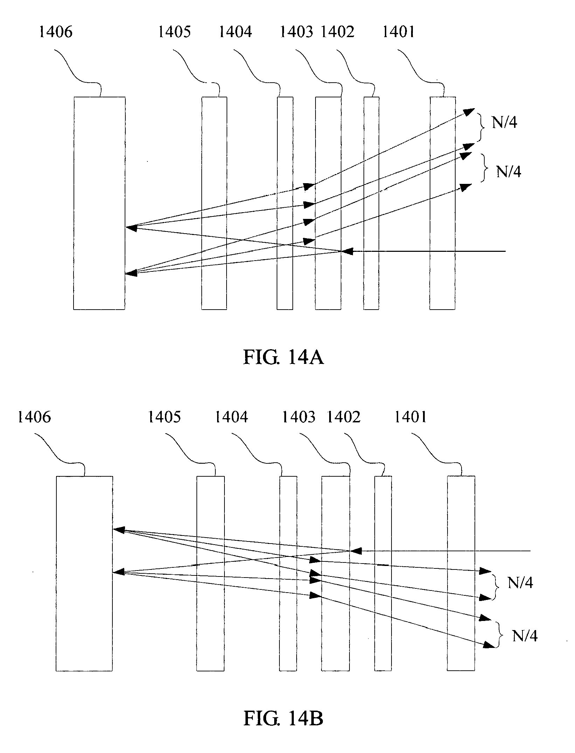

If the optical path angle adjustment device is the LCOS, in this embodiment of the present invention, a second QWP and a second half-wave liquid crystal plate that are successively arranged further need to be disposed between the LCOS and the PPG, so as to meet a requirement of the LCOS for the linearly polarized lights. The second QWP is adjacent to the PPG, and the second half-wave liquid crystal plate is adjacent to the LCOS. The second QWP is configured to adjust, to linearly polarized lights, the left-handed circularly polarized lights or the right-handed circularly polarized lights that have different transmission angles and are obtained after the PPG performs the splitting; the second half-wave liquid crystal plate is configured to adjust, to linearly polarized lights that have a same polarization direction, the linearly polarized lights that are obtained after the second QWP performs processing, and enable the polarization direction of the linearly polarized lights that are incident on the LCOS to be consistent with a direction of an optical axis of the LCOS; the LCOS is configured to adjust, to different transmission angles, the linearly polarized lights that are adjusted by the second half-wave liquid crystal plate and then are incident on a surface of the LCOS, and reflect adjusted lights for outputting, where after successively passing through the second half-wave liquid crystal plate, the second QWP, the PPG, the QWP, and the half-wave liquid crystal plate, the reflected linearly polarized lights become linearly polarized lights that have a same polarization direction. As shown in FIG. 14A and FIG 14B, after passing through a half-wave liquid crystal plate 1401 and a QWP 1402, an input beam becomes a left-handed circularly polarized light or a right-handed circularly polarized light; after being diffracted upwards or downwards by a PPG 1403, the left-handed circularly polarized light or the right-handed circularly polarized light becomes a right-handed circularly polarized light or a left-handed circularly polarized light. After passing through a QWP 1404, the right-handed circularly polarized light or the left-handed circularly polarized light that is diffracted by the PPG 1403 becomes linearly polarized lights, and then different voltages are controlled to be applied to a half-wave liquid crystal plate 1405, so as to change a polarization direction of the linearly polarized lights. After linearly polarized lights that reach a surface of an optical path angle adjustment device 1406 are reflected by the optical path angle adjustment device 1406, the reflected linearly polarized lights pass through the half-wave liquid crystal plate 1405, the QWP 1404, the PPG 1403, the QWP 1402, and the half-wave liquid crystal plate 1401 again and then become linearly polarized lights that have a same polarization direction. The linearly polarized lights that have the same polarization direction return to the optical path transmission subsystem and are finally routed to an output port of the optical fiber array.

If the optical path angle adjustment device is the MEMS, there is no special requirement for a beam polarization state; then, a second QWP and a second half-wave liquid crystal plate do not need to be disposed.

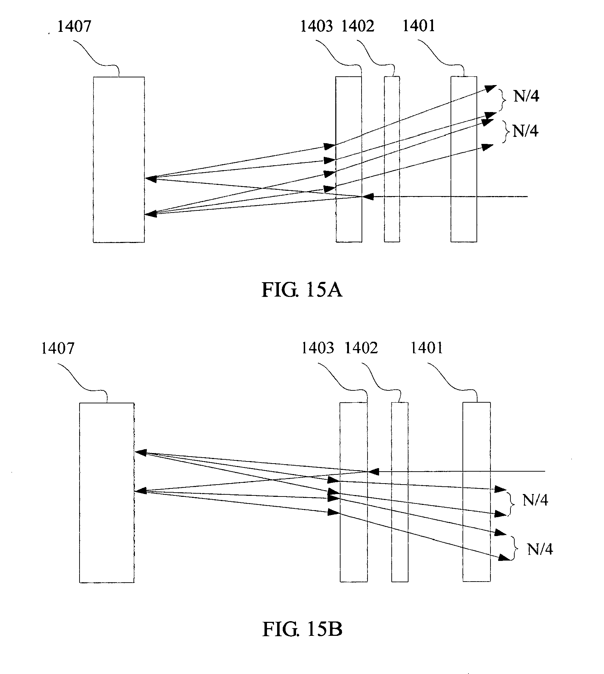

As shown in FIG. 15A and FIG. 15B, after passing through the half-wave liquid crystal plate 1401 and the QWP 1402, an input beam becomes a left-handed circularly polarized light or a right-handed circularly polarized light; after being diffracted upwards or downwards by the PPG 1403, the left-handed circularly polarized light or the right-handed circularly polarized light becomes a right-handed circularly polarized light or a left-handed circularly polarized light. After the right-handed circularly polarized light or the left-handed circularly polarized light that is diffracted by the PPG 1403 reaches a surface of MEMS 1407 and is reflected by the MEMS 1407, the reflected lights pass through the PPG 1403, the QWP 1402, and the half-wave liquid crystal plate 1401 again and then become linearly polarized lights that have a same polarization direction. The linearly polarized lights that have the same polarization direction return to the optical path transmission subsystem and are finally routed to an output port of the optical fiber array.

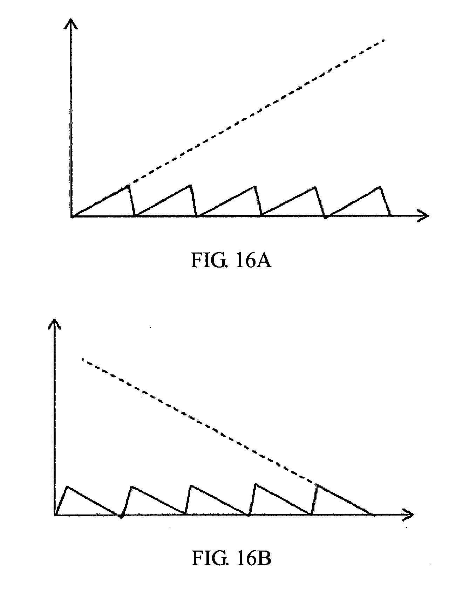

It may be learned from FIG. 14A, FIG 14B, FIG. 15A, and FIG. 15B that in this embodiment of the present invention, a half-wave liquid crystal plate, a QWP, and a PPG that are used in front of an optical path angle adjustment device may enable a maximum outgoing angle of an optical path switching subsystem to double. For example, in FIG. 14A and FIG 14B, an LCOS is used as the optical path angle adjustment device. If optical path switching of an N angle range needs to be implemented, the half-wave liquid crystal plate, the QWP, and the PPG that are in front of the LCOS first switch an incident beam to be in a set angle; then, after the LCOS generates switching of an N/4 angle range, a switched beam is diffracted back; then, the incident beam is switched to be in another angle by the half-wave liquid crystal plate, the QWP, and the PPG, and the same switching of an N/4 angle range is generated by the LCOS. In this embodiment of the present invention, phase gratings that are of different periods and are in different changing directions may be loaded in the LCOS, to implement an adjustment for a beam diffraction angle of the LCOS. For example, a manner shown in FIG 16A may be used to implement angle switching shown in FIG 14A, and a manner shown in FIG 16B may be used to implement angle switching shown in FIG. 14B. Therefore, by designing a diffraction angle of the half-wave liquid crystal plate, the QWP, and the PPG, and designing a switching angle range of the LCOS, it may be implement that a maximum angle range of an outgoing beam is increased to twice of a maximum diffraction angle range that is set by the LCOS. Likewise, in FIG. 15A and FIG. 15B, switching of an N/2 angle range may be implemented by using the same method. It may be seen that in a case in which a maximum diffraction angle range of the LCOS is not increased, the optical path switching subsystem provided in this embodiment of the present invention may increase an outgoing angle range of a beam, thereby increasing output ports or improving performance of the optical path switching subsystem.

In this embodiment of the present invention, the optical path angle adjustment device may be an LCOS or MEMS. If the optical path angle adjustment device is the LCOS, the LCOS is applied to this embodiment of the present invention, and it is assumed that a quantity of output ports keeps unchanged, a diffraction angle of the LCOS may decrease by a half, so that a phase grating period of the LCOS doubles; therefore, a variation of a phase of a grating may be smoother, and diffraction efficiency may be improved. If the optical path angle adjustment device is the MEMS, the MEMS are applied to this embodiment of the present invention, and it is assumed that a quantity of output ports keeps unchanged, a rotation angle of the MEMS may decreases by a half, thereby reducing a drive voltage of the MEMS, simplifying design of a drive circuit, and reducing a cost.

In the optical wavelength selective switch system 900 provided in this embodiment of the present invention, compared with a Wollaston prism, a phase compensation plate, and a half-wave plate that are traditionally used, a PPG and a QWPA are used in a beam processing subsystem, which can implement splitting and adjustment of a beam polarization state more easily, and production technologies of the PPG and the QWPA are simple, so that assembly and production of a beam processing device in the beam processing subsystem are also simpler.

In the optical wavelength selective switch system 900, a transmission grating and cylindrical lenses are used in a beam transmission subsystem, so that a beam may pass through the transmission grating twice, which can reduce a focal length of the optical wavelength selective switch system. Because the focal length of the entire system becomes shorter, the optical wavelength selective switch system is more compact. In addition, a smaller beam waist may be used for transmission, thereby further obtaining 3dB spectrum bandwidth. In the optical wavelength selective switch system 900, an SPG is used in a beam switching subsystem, which may implement attenuation more conveniently, and can solve a problem of instantaneous crosstalk. In the optical wavelength selective switch system 900, a PPG, a QWP, and a half-wave liquid crystal plate are used in the optical path switching subsystem, which increase an outgoing angle of a beam routed by the optical path switching subsystem 903, so as to achieve coupling to more output ports of an optical fiber array, and improve diffraction efficiency.

An embodiment of the present invention further provides a beam attenuation and switching device, including an SPG and an optical path angle adjustment device that are successively arranged on an optical transmission path.

The SPG is configured to: when a first voltage is applied, after diffracting an incident beam, change a polarization state and a transmission angle that are of the beam; when a second voltage is applied, skip changing a polarization state and a transmission angle that are of a beam; or when different voltages are applied, change energy of a beam diffracted to another transmission angle different from an original transmission angle, and attenuate a beam in a direction of the original transmission angle. For example, in this embodiment of the present invention, when a zero voltage or a low voltage is applied, after an incident beam is diffracted, a polarization state and a transmission angle (level ±1) that are of the beam are changed; when a high voltage is applied, a transmission angle (level 0) or a polarization direction that are of a beam is not changed; when different voltages are applied, a beam may be controlled to be diffracted to level ± 1, thereby implementing different attenuation of a level-0 beam. The optical path angle adjustment device is configured to adjust, to a different transmission angle, a beam that is incident on the optical path angle adjustment device after passing through the SPG, and then output the beam.

The beam attenuation and switching device provided in this embodiment of the present invention includes an optical path angle adjustment device and an SPG. The SPG is used in front of the optical path angle adjustment device. The SPG may be used to implement attenuation; the optical path angle adjustment device is merely used for optical path switching, which simplifies a control process of optical path switching. Further, in this embodiment of the present invention, in an optical path switching process, attenuation of the SPG is first adjusted to a maximum value, and then optical path switching is performed by using the optical path angle adjustment device. After the optical path angle adjustment device is steady, the attenuation of the SPG is adjusted to a required value, which may prevent instantaneous crosstalk in the optical path switching process.

In this embodiment of the present invention, the optical path angle adjustment device may be an LCOS or MEMS. If the optical path angle adjustment device is the LCOS, and the LCOS is applied to this embodiment of the present invention, an optical path switching process may be implemented without using a complex control algorithm for the LCOS. If the optical path angle adjustment device is the MEMS, and the MEMS are applied to this embodiment of the present invention, a problem of instantaneous crosstalk in the optical path switching process may be prevented by using one-dimensional MEMS without using two-dimensional MEMS, thereby reducing MEMS processing difficulty and reducing a cost.

The beam attenuation and switching device provided in this embodiment of the present invention may be applied to various optical systems, for example, an optical wavelength selective switch system. For description, not detailed enough, about the beam attenuation and switching device provided in this embodiment of the present invention, reference may be made to FIG 13 and description of the related embodiment, and details are not described herein again.

An embodiment of the present invention further provides a beam attenuation and switching device, including a first half-wave liquid crystal plate, a first QWP, a PPG, and an optical path angle adjustment device that are successively arranged on an optical transmission path, where
the first half-wave liquid crystal plate is configured to: at different voltages, change a polarization direction of a linearly polarized light that is incident on a surface of the first half-wave liquid crystal plate;
the first QWP is configured to adjust, to a left-handed circularly polarized light or a right-handed circularly polarized light, a linearly polarized light that is obtained after the first half-wave liquid crystal plate performs processing;
the PPG is configured to split, into lights that have different transmission angles, the left-handed circularly polarized light or the right-handed circularly polarized light that is obtained after the first QWP performs processing; and
the optical path angle adjustment device is configured to adjust, to different transmission angles, the linearly polarized lights that are incident on a surface of the optical path angle adjustment device, and then reflect adjusted lights for outputting, where after successively passing through the PPG, the first QWP, and the first half-wave liquid crystal plate, the reflected linearly polarized lights become linearly polarized lights that have a same polarization direction.

In this embodiment of the present invention, the optical path angle adjustment device may be an MEMS or LCOS.

In this embodiment of the present invention, if the optical path angle adjustment device is the LCOS, the beam attenuation and switching device further includes a second QWP and a second half-wave liquid crystal plate that are successively arranged on the optical transmission path, the second QWP and the second half-wave liquid crystal plate are located between the LCOS and the PPG, the second QWP is adjacent to the PPG, and the second half-wave liquid crystal plate is adjacent to the LCOS, where
the second QWP is configured to adjust, to linearly polarized lights, the left-handed circularly polarized lights or the right-handed circularly polarized lights that have different transmission angles and are obtained after the PPG performs the splitting;
the second half-wave liquid crystal plate is configured to adjust, to linearly polarized lights that have a same polarization direction, the linearly polarized lights that are obtained after the second QWP performs processing, and enable the polarization direction of the linearly polarized lights that are incident on a surface of the LCOS to be consistent with a direction of an optical axis of the LCOS; and
the LCOS is configured to adjust, to different transmission angles, the linearly polarized lights that are adjusted by the second half-wave liquid crystal plate and then are incident on the surface of the LCOS, and reflect adjusted lights for outputting, where after successively passing through the second half-wave liquid crystal plate, the second QWP, the PPG, the first QWP, and the first half-wave liquid crystal plate, the reflected linearly polarized lights become linearly polarized lights that have a same polarization direction.

In the beam attenuation and switching device provided in this embodiment of the present invention, a half-wave liquid crystal plate, a QWP, and a PPG are used in front of an optical path angle adjustment device, which may enable an outgoing angle of an optical path switching subsystem to double, which achieves coupling to more output ports.

In this embodiment of the present invention, the optical path angle adjustment device may be an LCOS or MEMS. If the optical path angle adjustment device is the LCOS, the LCOS is applied to this embodiment of the present invention, and it is assumed that a quantity of output ports keeps unchanged, a diffraction angle of the LCOS may decrease by a half, so that a phase grating period of the LCOS doubles; therefore, a variation of a phase of a grating may be smoother, and diffraction efficiency may be improved. If the optical path angle adjustment device is the MEMS, the MEMS are applied to this embodiment of the present invention, and it is assumed that a quantity of output ports keeps unchanged, a rotation angle of the MEMS may decrease by a half, thereby reducing a drive voltage of the MEMS, simplifying design of a drive circuit, and reducing a cost.

The beam attenuation and switching device provided in this embodiment of the present invention may be applied to various optical systems, for example, an optical wavelength selective switch system. For description, not detailed enough, about the beam attenuation and switching device provided in this embodiment of the present invention, reference may be made to FIG. 14A, FIG 14B, FIG 15A, FIG. 15B, and description of the related embodiment, and details are not described herein again.

It should be noted that, an incident beam, a beam that is processed by a related device, or the like that is described in the foregoing and shown in the accompanying drawings in the embodiments of the present invention uses one beam as an example for description, which is merely for ease of illustration and description. The embodiments of the present invention set no limitation on a quantity of beams. A quantity of the beams that are involved in the embodiments of the present invention is at least one, and a quantity of beams that involve same or different transmission angles, or same or different polarization directions is at least two.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A beam processing device, comprising at least one quarter-wave plate array, wherein each quarter-wave plate array is corresponding to at least one polymer polarization grating, and the polymer polarization grating and the quarter-wave plate array are successively arranged on an optical transmission path, wherein:
the polymer polarization grating splits a beam that is incident on a surface of the polymer polarization grating into a left-handed circularly polarized light and a right-handed circularly polarized light; and
the quarter-wave plate array comprises at least two quarter-wave plates whose slow axes are in different directions, and adjusts, to linearly polarized lights that have a same polarization direction, the left-handed circularly polarized light and the right-handed circularly polarized light that are obtained after the polymer polarization grating performs the splitting.

2. The beam processing device according to claim 1, wherein each quarter-wave plate array is corresponding to one polymer polarization grating; and
the one polymer polarization grating corresponding to each quarter-wave plate array is configured to split a beam that is incident on a surface of the polymer polarization grating into a left-handed circularly polarized light and a right-handed circularly polarized light that have different transmission angles.

3. The beam processing device according to claim 1, wherein each quarter-wave plate array is corresponding to two polymer polarization gratings; and
the two polymer polarization gratings corresponding to each quarter-wave plate array are configured to split a beam that is incident on a surface of the polymer polarization gratings into a left-handed circularly polarized light and a right-handed circularly polarized light that have a same transmission angle.

4. A beam attenuation and switching device, comprising a switchable polarization grating and an optical path angle adjustment device, wherein the switchable polarization grating and the optical path angle adjustment device are successively arranged on an optical transmission path, wherein:
the switchable polarization grating is configured to: when a first voltage is applied, after diffracting an incident beam, change a polarization state and a transmission angle that are of the incident beam; when a second voltage is applied, after diffracting an incident beam, skip changing a polarization state and a transmission angle that are of the incident beam; or when different voltages are applied, diffract an incident beam, so as to change the incident beam to another transmission angle different from an original transmission angle, and attenuate a beam in a direction of the original transmission angle; and
the optical path angle adjustment device is configured to adjust, to a different transmission angle, a beam that is incident on the optical path angle adjustment device after passing through the switchable polarization grating, and then output the beam.

5. The beam attenuation and switching device according to claim 4, wherein the optical path angle adjustment device is a liquid crystal on silicon or micro-electro-mechanical systems.

6. A beam attenuation and switching device, comprising a first half-wave liquid crystal plate, a first quarter-wave plate, a polymer polarization grating, and an optical path angle adjustment device that are successively arranged on an optical transmission path, wherein:
the first half-wave liquid crystal plate is configured to: at different voltages, change a polarization direction of a linearly polarized light that is incident on a surface of the first half-wave liquid crystal plate;
the first quarter-wave plate is configured to adjust, to a left-handed circularly polarized light or a right-handed circularly polarized light, a linearly polarized light that is obtained after the first half-wave liquid crystal plate performs processing;
the polymer polarization grating is configured to split, into lights that have different transmission angles, the left-handed circularly polarized light or the right-handed circularly polarized light that is obtained after the first quarter-wave plate performs processing; and
the optical path angle adjustment device is configured to adjust, to different transmission angles, the lights that have different transmission angles, are obtained after the polymer polarization grating performs the splitting, and are incident on a surface of the optical path angle adjustment device, and then reflect adjusted lights for outputting, wherein after successively passing through the polymer polarization grating, the first quarter-wave plate, and the first half-wave liquid crystal plate, the reflected lights become linearly polarized lights that have a same polarization direction.

7. The beam attenuation and switching device according to claim 6, wherein the optical path angle adjustment device is micro-electro-mechanical systems.

8. The beam attenuation and switching device according to claim 6, wherein the optical path angle adjustment device is a liquid crystal on silicon, the beam attenuation and switching device further comprises a second quarter-wave plate and a second half-wave liquid crystal plate that are successively arranged on the optical transmission path, the second quarter-wave plate and the second half-wave liquid crystal plate are located between the liquid crystal on silicon and the polymer polarization grating, the second quarter-wave plate is adjacent to the polymer polarization grating, and the second half-wave liquid crystal plate is adjacent to the liquid crystal on silicon, wherein:
the second quarter-wave plate is configured to adjust, to linearly polarized lights, the left-handed circularly polarized lights or the right-handed circularly polarized lights that have different transmission angles and are obtained after the polymer polarization grating performs the splitting;
the second half-wave liquid crystal plate is configured to adjust, to linearly polarized lights that have a same polarization direction, the linearly polarized lights that are obtained after the second quarter-wave plate performs processing, and enable the polarization direction of the linearly polarized lights that are incident on a surface of the liquid crystal on silicon to be consistent with a direction of an optical axis of the liquid crystal on silicon; and
the liquid crystal on silicon is configured to adjust, to different transmission angles, the linearly polarized lights that are adjusted by the second half-wave liquid crystal plate and then are incident on the surface of the liquid crystal on silicon, and reflect adjusted lights for outputting, wherein after successively passing through the second half-wave liquid crystal plate, the second quarter-wave plate, the polymer polarization grating, the first quarter-wave plate, and the first half-wave liquid crystal plate, the reflected linearly polarized lights become linearly polarized lights that have a same polarization direction.

9. An optical wavelength selective switch system, comprising an optical fiber array, a beam processing subsystem, an optical path transmission subsystem, and an optical path switching subsystem, wherein:
the optical fiber array is configured to send at least one input beam to the beam processing subsystem and receive at least one output beam output by the beam processing subsystem;
the beam processing subsystem comprises the beam processing device according to any one of claims 1 to 3, and performs polarization state splitting and adjustment on the input beam or the output beam by using the beam processing device, to obtain linearly polarized lights that have a same polarization direction;
the optical path transmission subsystem is configured to diffract and split, according to different angles, the linearly polarized lights that have the same polarization direction and are obtained after the beam processing device in the beam processing subsystem performs processing, and then transmit the linearly polarized lights to the optical path switching subsystem; and
the optical path switching subsystem comprises the beam attenuation and switching device according to any one of claims 4 to 8, and is configured to change an angle of the lights transmitted by the optical path transmission subsystem to implement attenuation and optical path switching functions.

10. The optical wavelength selective switch system according to claim 9, wherein the optical path transmission subsystem comprises a first cylindrical lens, a transmission grating, and a second cylindrical lens, wherein:
an optical axis of the second cylindrical lens and an optical axis of the first cylindrical lens are perpendicular to each other;
the transmission grating is located between the first cylindrical lens and the second cylindrical lens, and a distance between the transmission grating and the second cylindrical lens is less than a distance between the transmission grating and the first cylindrical lens;
the beam processing device in the beam processing subsystem and the beam attenuation and switching device in the optical path switching subsystem are located at a location of focuses of the first cylindrical lens and the second cylindrical lens;
the first cylindrical lens is configured to reflect the linearly polarized lights that have the same polarization direction and are obtained after the beam processing device in the beam processing subsystem performs processing, to parallel linearly polarized lights in a plane that is perpendicular to the optical axis of the first cylindrical lens;
the transmission grating is configured to perform, according to different angles, first diffraction on the parallel linearly polarized lights obtained after the reflection performed by the first cylindrical lens, and perform, according to different angles, second diffraction on a beam reflected by the second cylindrical lens; and
the second cylindrical lens is configured to reflect beams obtained after the transmission grating performs the first diffraction, to parallel linearly polarized lights in a plane that is perpendicular to the optical axis of the second cylindrical lens, and enable the reflected parallel linearly polarized lights to be incident on the transmission grating.
